# EUROPEAN PATENT APPLICATION

(11) **EP 3 575 786 A1**
(43) Date of publication of application: **04.12.2019**
(21) Application number: 19152439.6
(22) Date of filing: 18.01.2019
(51) Int. Cl.: G01N 30/88, G01N 31/12, G01N 30/06, G01N 30/24

(54) **AUTOMATIC ANALYZER FOR DETECTING CHEMICAL ELEMENTS IN ORGANIC COMPOUNDS**

(30) Priority: 19.01.2018 IT 201800001354
(71) Applicant: Ecoenergetics S.R.L. in Liquidazione, 20060 Vignate (IT)
(72) Inventor: ITALIANO, Pietro, 20060 Vignate (IT)
(74) Representative: Savi, Massimiliano

(57) **Abstract**

The invention relates to an automatic analyzer for organic elemental analysis, said analyzer comprising:
- lines for gaseous fluids,
- sample holders to be analyzed,
- a catalytic combustion reactor,
- a water adsorber,
- an organic compounds detector, and a logical unit for detection data processing, wherein the analyzer further comprises an automatic oxygen meter and the oxygen supply to the catalytic combustion reactor is managed by the data processing unit as a function of the stoichiometric requirement calculation and of the operating time of the oxygen meter.

## Description

### FIELD OF THE INVENTION

The present invention relates to an automatic analyzer for detecting chemical elements in organic compounds, i.e. organic elemental analyses.

### BACKGROUND ART

It is known that organic elemental analysis aims at determining the percentage presence of chemical elements such as carbon, hydrogen, nitrogen (for example, present in proteins) and other elements such as sulphur (in addition to or as an alternative to nitrogen).

This analytical technique is also known as organic elemental microanalysis and is based on combustion processes allowing to obtain molecules such as CO₂, N₂, H₂O, SO₂ and CO from organic oxygen.

One of these techniques, based on combustion, was invented by Dumas in the first half of the nineteenth century and then automated in the 60s of the twentieth century.

First, combustion in homogeneous gas phase was used, which is slower and implies the presence of comburent well beyond the stoichiometric amount.

Moreover, with this type of combustion, pyrolysis residues in the form of powders can be formed, and in any case, mass losses with respect to the quantitative analysis can occur. The combustion products and the mixture with large excesses of comburent must be collected, homogenized, for then proceeding to the analysis, and only a small fraction thereof passes to the analyzer.

Especially in this type of combustion, large amounts of O₂ are required, which must be pure up to the fifth decimal place, which causes a considerably high cost in order to carry out this process.

At the end of the combustion, fumes must be collected, sampled and analyzed, which operations are the source of further costs. Alternatively, catalysts may be used, which however must be stable with respect to poisoning and deactivation, with consequent difficulties and additional costs.

It is an object of the present invention to provide an automatic analyzer for organic elemental analyses which allows to optimize the oxygen consumption during the analysis processes.

### BRIEF SUMMARY OF THE INVENTION

These and other objects are achieved by an automatic analyzer for organic elemental analyses, said analyzer comprising:
- lines for gaseous fluids,
- sample holders to be analyzed,
- a catalytic combustion (oxidation) reactor,
- a NOx reduction reactor
- a water adsorber system,
- a chromatographic detector of the compounds in the combustion fumes, and a logical unit for detection data processing, where the analyzer further comprises an automatic oxygen meter and the oxygen supply to the catalytic combustion reactor is managed by the data processing unit as a function of the stoichiometric requirement calculation and of the operating time of the oxygen meter.

Further features of the invention can be deduced from the dependent claims.

### BRIEF DESCRIPTION OF THE DRAWINGS

Further features and advantages of the invention will become apparent upon reading the following specification provided as a non-limiting example, with the aid of the figures shown in the accompanying drawings, in which:
- Figure 1 depicts a flow chart of a preferred embodiment of the analyzer of the present invention; and
- Figures 2-5 depict flow charts of further alternative embodiments of the analyzer of the present invention.

### DETAILED DESCRIPTION OF SCME EMBODIMENTS OF THE PRESENT INVENTION

The invention will now be described with reference to the accompanying drawings.

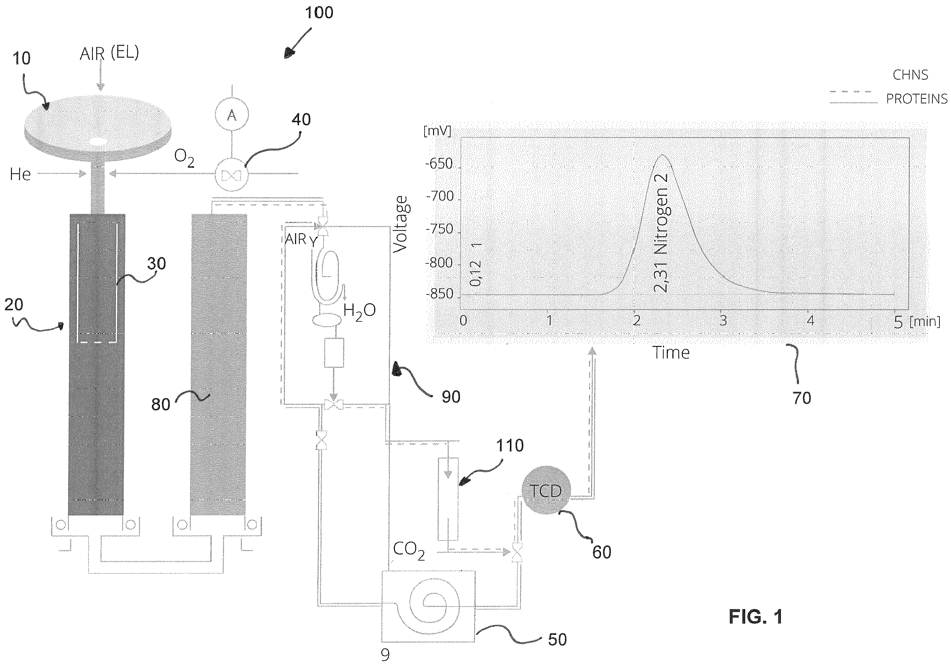

In particular, Figure 1 shows a flow chart of a first embodiment of the analyzer of the invention, indicated as a whole by reference numeral 100.

The analyzer 100 is equipped with an automatic sampler 10, preferably a 120 position-sampler, consisting of three overlapping carousels each comprising 40 positions.

The sampler 10 is driven by a pneumatic device which, while allowing a sample to fall into the combustion reactor, simultaneously loads the next sample on a piston-driven slide within the sampler. Through the sampler, oxygen and helium are also introduced into the system.

The sampler 10 is provided with a "purging" zone to flush any air residues (i.e. N₂) with a He flow.

The sampler 10 feeds samples weighed and contained in Tin or Silver capsules to an oxidation reactor 20 which has a first stage consisting of a combustion chamber and an ash accumulation zone, also including a quartz pipe indicated with 30.

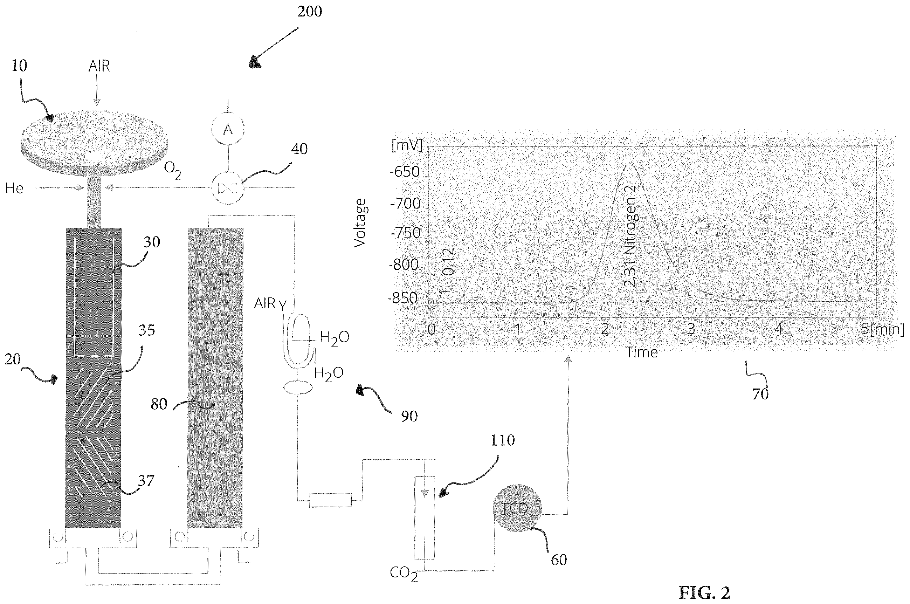

As better shown in Figure 2, the oxidation reactor 20 can include a second stage 35 containing a suitable catalytic bed where the fast oxidation reaction at high temperature occurs, and a third stage 37 for a finishing oxidation reaction.

The catalysts used for the first and second stage catalytic beds are generally those already known and routinely used in the heterogeneous gas phase oxidation reactions, respectively fast and slow.

The oxidation reactor 20 is capable of bringing a minimum number of samples equal to 1000 to full oxidation before needing to replace the quartz pipe.

The catalysts consist of special mixed oxide pins supported by two layers having different surfaces stabilizing at 1000 °C and 750 °C. Downstream of the oxidation reactor 20, a reduction reactor 80 containing reduced copper and copper oxide for the reduction of NOx to nitrogen is provided, allowing to retain both the excess oxygen and the impurities consisting of S and halogens. A catalytic copper oxide bed is used for the oxidation of traces of CO to CO₂.

Downstream of the reactors, a water extraction system 90 is provided, also referred to as a water absorber, comprising an outward moisture exchanger consisting of a pipe lapped by counterflow dry gases conveyed by all the emissions leaving the instrument.

A microfilter of a substance capable of adsorbing any non-evaporated water traces is provided and located at the outlet of the water absorber which is preferably made of magnesium perchlorate.

Further downstream of the water extraction system 90, a CO₂ adsorption device 110 is provided, which is a microadsorber consisting of one, two or three reactors contained in a Peltier principle-based device, applied to electrically active ceramic walls and containing very active zeolites. The CO₂ contained in the fumes of each analysis is adsorbed until the zeolite is saturated. The fumes then pass to a second degassing furnace and the first adsorber is regenerated at high temperature to be ready for subsequent analysis.

Molecular sieves of various sizes (from about 15 to 40 grams) are used, which do not contribute to increase the pressure drop in the process.

According to the present invention, a device to ensure the flow stability is further provided, comprising an automatic oxygen meter 40 adapted to avoid pressure variations in the circuit, especially during combustion.

As also disclosed below, the automatic oxygen meter 40 is controlled by a data processing unit 70 and the oxygen supply to the catalytic combustion reactor is managed by the data processing unit 70 as a function of the stoichiometric requirement calculation and opening time of the oxygen meter 40.

The gas leaving the water extraction system 90 and the CO₂ adsorption device 110 is sent to the actual analyzer consisting of a gas chromatographic column 50 (or in a variant of the invention by a mass spectrometer) and a thermoconductivity detector TCD 60 (or alternatively HWD - hot wire detection).

The TCD detector is preferably an absolute electrical conductivity detector, which in the present version does not require a reference gas flow but is based on the energy developed by a filament kept at a constant temperature since lapped by a constant flow rate gas. Finally, the analyzer 100 includes a logical unit 70 for data processing.

The operation of the analyzer 100 may be described as follows.

An algorithm determines the amount of oxygen to be used based on the weight and nature of the sample to be analyzed and placed in a capsule inside the sampler 10.

A valve V6 is activated for the time required to obtain the calculated amount of oxygen in volume.

One of the advantages of using the aforementioned algorithm and the oxygen valve as a function of time is that negligible load losses are thus obtained during combustion even in the case of large samples. Therefore, the combustion is also quantitative and is carried out in a heterogeneous phase by the catalysts dedicated thereto and requires a minimum amount of comburent (which also reduces the consumption of copper).

The separation of the elements generated by the combustion, in particular N₂, CO₂, H₂O, SO₂, is obtained by means of the gas chromatograph column 50 and has masses of samples from 5 µg up to 50 mg of the organic matter.

In the case of food analysis, the sample mass can reach up to 750 mg, bypassing the gas chromatograph column and using dedicated systems for the extraction of CO₂ and H₂O from the fumes.

Figure 2 depicts a flow chart of an alternative embodiment of the analyzer, indicated as a whole by reference numeral 200, particularly suitable for the analysis of proteins.

In Figure 2 the stages of the oxidation reactor 20 are better seen, i.e. the second stage 35 containing a suitable catalytic bed where the fast oxidation reaction at high temperature occurs and the third stage 37 operating at lower temperatures for a slower oxidation reaction. The analyzer 200 in Figure 2 does not include a gas chromatographic column.

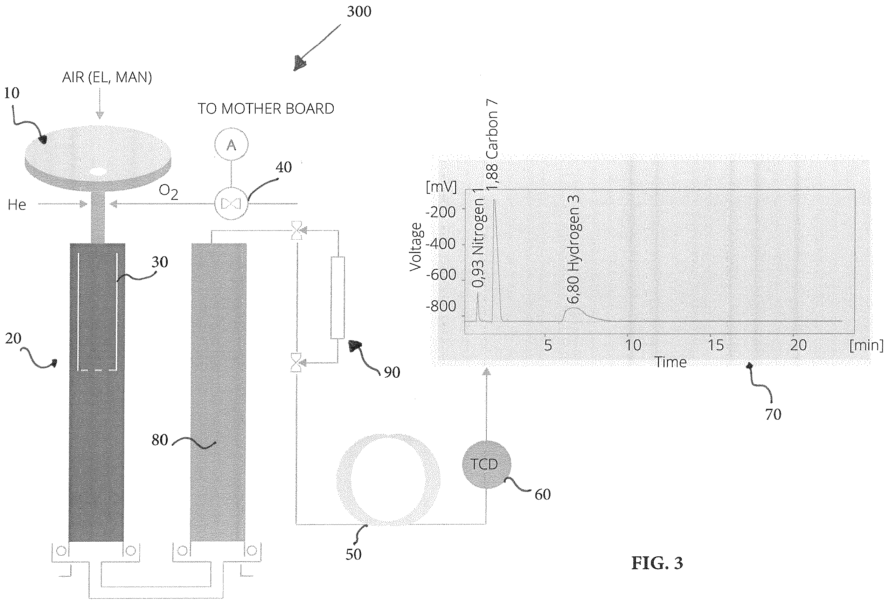

Figure 3 shows a further simplified embodiment of the analyzer of the invention, indicated as a whole by reference numeral 300.

This embodiment is a simplified version of the analyzer 100 described above.

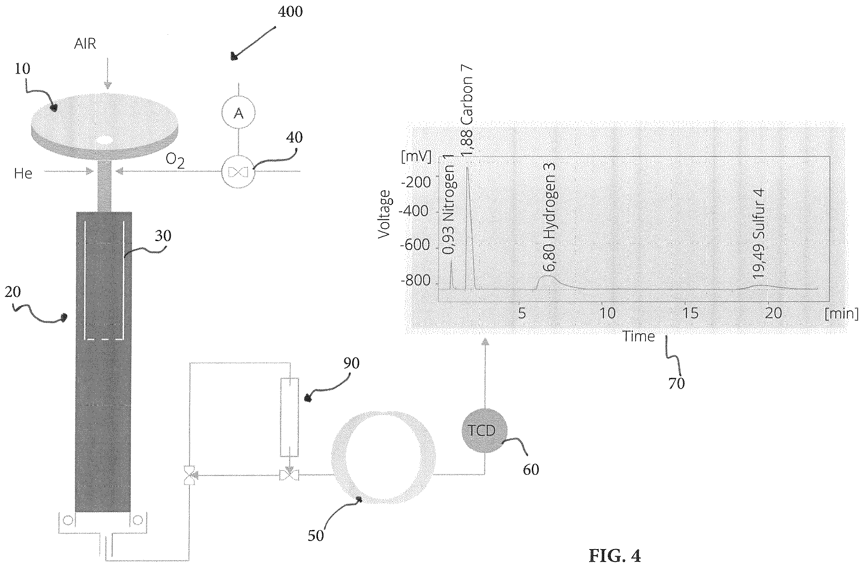

Figure 4 shows a further simplified embodiment of the analyzer of the invention, indicated as a whole by reference numeral 400.

This embodiment is a further simplified version of the analyzer 100 described above where, moreover, the reduction reactor 80 is not provided.

Due to its configuration and low cost, the analyzer 400 is suitable, for example but not exclusively, for developing countries.

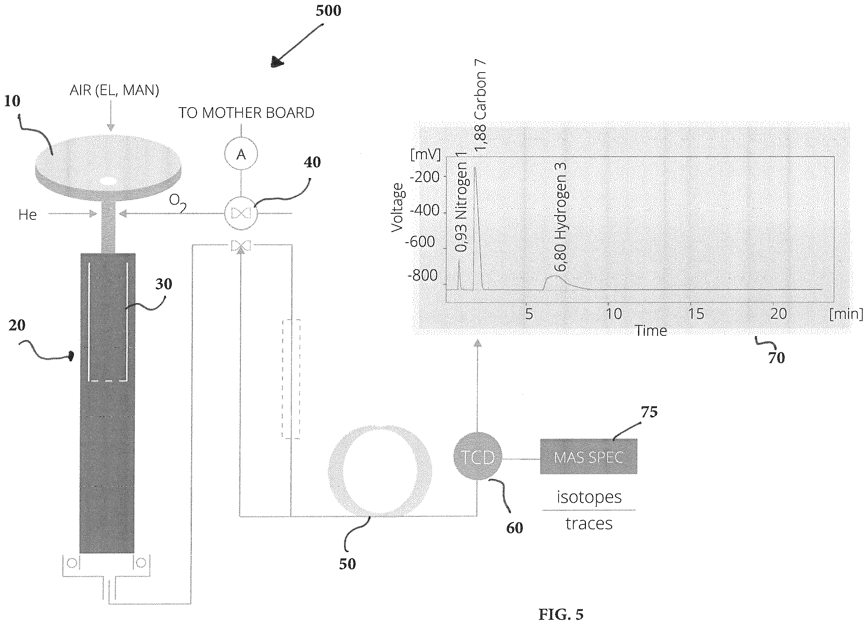

Finally, Figure 5 shows a further simplified embodiment of the analyzer of the invention, indicated as a whole by reference numeral 500.

This configuration is similar to that of the previously mentioned analyzer 400 but differs therefrom by the presence in addition to or in place of the thermal conductivity detector 60 (TCD) of a mass spectrometer 75.

Modifications or improvements may be obviously made to the invention as described, all dictated by contingent or particular need, without thus departing from the scope of the invention as claimed below.

## Claims

1. An automatic analyzer for organic elemental analyses, said analyzer comprising:
- lines for gaseous fluids,
- sample holders to be analyzed (10),
- a catalytic combustion reactor (20),
- a water adsorber (90),
- a chromatographic detector (50) of the compounds in the combustion fumes, and a logical unit (70) for detection data processing, wherein the analyzer further comprises an automatic oxygen meter (40) and wherein the oxygen supply to the catalytic combustion reactor is managed by the data processing unit (70) as a function of the stoichiometric requirement calculation and of the operating time of the oxygen meter (40).

2. An analyzer according to claim 1, wherein downstream of the oxidation reactor (20), a reduction reactor (80) is further provided, containing reduced copper and copper oxide for the reduction of NOx to nitrogen.

3. An analyzer according to claim 1, wherein the sample holder (10) is an automatic 120-position sampler, consisting of three overlapping carousels, each comprising 40 positions and operated by a pneumatic device, which, while allowing a sample to fall into the combustion reactor, simultaneously loads the next sample on a piston-driven slide within the sampler, and is provided with a purging zone to flush any air residues with a He flow.

4. An analyzer according to claim 1, wherein the sample holder (40) feeds the oxidation reactor (20), wherein said oxidation reactor (20) has a first stage consisting of a combustion chamber and an ash accumulation zone which also includes a quartz pipe (30).

5. An analyzer according to claim 4, wherein the oxidation reactor (20) can include a second stage (35) containing a catalytic bed, where the fast oxidation reaction at high temperature occurs, and a third stage (37) for a finishing oxidation reaction.

6. An analyzer according to claim 1, wherein the water adsorber (90) comprises an outward moisture exchanger consisting of a pipe lapped by counterflow dry gases conveyed from all the emissions leaving the instrument, and a microfilter provided with a substance capable of adsorbing any non-evaporated water traces.

7. An analyzer according to claim 1, wherein a CO₂ adsorption device (110) is provided, comprising a microadsorber consisting of one, two or three reactors contained in a Peltier principle-based device, applied to electrically active ceramic walls and containing very active zeolites.

8. An analyzer according to claim 1, wherein a mass spectrometer is provided.

9. An analyzer according to claim 1, wherein an absolute electrical conductivity TCD detector (60) is provided, which does not require a reference gas flow, but is based on the energy developed by a filament kept at a constant temperature since lapped by a constant flow rate gas.
